# EUROPÄISCHE PATENTSCHRIFT

(11) **EP 4 027 211 B1**
(45) Veröffentlichungstag und Bekanntmachung des Hinweises auf die Patenterteilung: **11.11.2026**
(21) Anmeldenummer: 22150564.7
(22) Anmeldetag: 07.01.2022
(51) Int. Cl.: G05D 23/19

(54) **VERFAHREN ZUM OPTIMIEREN EINER HEIZKURVE UND HEIZUNGSSYSTEM**
METHOD FOR OPTIMIZING A HEATING CURVE AND HEATING SYSTEM
PROCÉDÉ D'OPTIMISATION D'UNE COURBE DE CHAUFFAGE ET SYSTÈME DE CHAUFFAGE

(30) Priorität: 08.01.2021 DE 102021200129
(43) Veröffentlichungstag der Anmeldung: 13.07.2022
(73) Patentinhaber: Viessmann Holding International GmbH, 35108 Allendorf (Eder) (DE)
(72) Erfinder: WENZEL, Bernd, 35444 Biebertal (DE)
(74) Vertreter: MERH-IP Matias Erny Reichl Hoffmann Patentanwälte PartG mbB

(56) Entgegenhaltungen:
- DE-A1- 102017 205 033
- DE-A1- 4 330 063
- UNKNOWN, SHKPROFI, 1 August 2008 (2008-08-01), Retrieved from the Internet <URL:https://www.shk-profi.de/artikel/shk_Heizregulierungen_sind_wichtig-1485625.html#:~:text=F%C3%BCr%20eine%20maximale%20Einsparung%20bei,Heizkurve%20korrekt%20eingestellt%20werden%20kann> [retrieved on 20251010]
- INGENIEUR-BÜRO MATTHAEI: "Heizkurve richtig einstellen", 1 May 2017 (2017-05-01), Retrieved from the Internet <URL:https://energie-effizient-sparen.de/fachbeitraege/heizkurve-richtig-einstellen/#:~:text=Vorgehensweise%20Die%20Heizk%C3%B6rperventile%20sollen%20offen,warm%E2%80%9C%2C%20wenn%20es%20k%C3%A4lter%20ist> [retrieved on 20251010]
- SEVERAL-UNKNOWN, 10 December 2009 (2009-12-10), Retrieved from the Internet <URL:https://www.haustechnikdialog.de/Forum/t/112066/Wer-hat-Erfahrung-mit-Alle-Thermostatventile-auf-Strategie-?utm_source=chatgpt.com> [retrieved on 20251010]

## Beschreibung

Die vorliegende Erfindung betrifft ein Verfahren zum Optimieren einer Heizkurve eines Wärmeerzeugers in einem Heizungssystem sowie ein Heizungssystem. Insbesondere soll die Heizkurve eines witterungsgeführten Wärmeerzeugers optimiert werden.

Ein beispielhaftes Heizungssystem zum Beheizen eines Gebäudes umfasst einen witterungsgeführten Wärmeerzeuger, der ein fluides Wärmeträgermedium auf eine Vorlaufsolltemperatur erhitzt und das erhitzte Wärmeträgermedium an eine Vorlaufleitung des Heizungssystems bereitstellt. Über Heizkörper kann das Wärmeträgermedium die Wärme an Räume des Gebäudes abgeben. Die Außentemperatur des Gebäudes kann beispielsweise über mindestens einen Außentemperatursensor gemessen und an eine Regeleinrichtung des Wärmeerzeugers bereitgestellt werden.

Bei einem witterungsgeführten Wärmeerzeuger wird die Vorlaufsolltemperatur in Abhängigkeit der Außentemperatur eingestellt. Eine Funktion, die den Zusammenhang aus Vorlaufsolltemperatur und Außentemperatur beschreibt, wird als Heizkurve oder Heizkennlinie bezeichnet. Die Heizkennlinie kann beispielsweise mittels zwei Funktionsparameter, die Steigung und die Parallelverschiebung, an der Regeleinrichtung des Wärmeerzeugers eingestellt werde. Die Steigung und die Parallelverschiebung werden zum Teil auch als Neigung und Niveau bezeichnet.

Ändert sich die Außentemperatur, hat dies eine direkte Auswirkung auf die vom Wärmeerzeuger bereitgestellte Vorlauftemperatur. Grundsätzlich gilt: Je niedriger die Außentemperatur, desto höher ist die Vorlauftemperatur. Die Vorlauftemperatur kann einen entscheidenden Einfluss auf die Effizienz des Heizungssystems haben. Daher kann eine optimierte Einstellung der Heizkurve, die Effizienz des Heizungssystems verbessern.

Die Vorlaufsolltemperatur sollte weder zu hoch noch zu niedrig eingestellt werden. Eine hohe Vorlauftemperatur kann unter anderem zu hohen Wärmeverlusten und hohen Heizkosten führen. Eine zu niedrig eingestellte Vorlauftemperatur hingegen kann dazu führen, dass es in den Räumen des Gebäudes nicht ausreichend warm wird. Um letzteres zu vermeiden, wird beim Einbau des Wärmeerzeugers häufig eine Heizkurve eigestellt, die zu einer zu hohe Vorlauftemperatur führt.

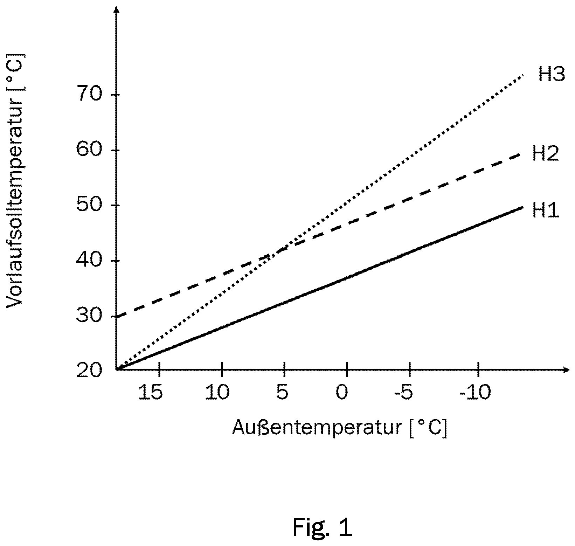

Fig. 1 zeigt beispielhafte Heizkurven eines witterungsgeführten Wärmeerzeugers. Auf der horizontalen Achse ist die Außentemperatur aufgetragen. Auf der vertikalen Achse ist die Vorlaufsolltemperatur aufgetragen. Der Schnittpunkt der beiden Achsen liegt bei jeweils 20°C. Die Heizkurve H1 hat eine relativ flache Steigung und beginnt am Achsenschnittpunkt. Die gestrichelt dargestellte Heizkurve H2 hat dieselbe Steigung wie H1, ist aber um 10°C parallel zur vertikalen Achse nach oben verschoben. Die Heizkurve H3 hat dieselbe Parallelverschiebung wie die Heizkurve H1, ist aber deutlich steiler als H1 und H2.

Bei einer Außentemperatur von 0°C würde ein mit der Heizkurve H1 betriebener Wärmeerzeuger eine Vorlauftemperatur von 38°C bereitstellen, beim Betrieb mit Heizkurve H2 eine Vorlauftemperatur von 48°C und beim Betrieb mit Heizkurve H2 eine Vorlauftemperatur von 50°C.

Die dargestellten beispielhaften Heizkurven H1, H2, H3 haben eine konstante Steigung. Die vorliegende Erfindung ist jedoch nicht auf Heizkurven mit konstanter Steigung beschränkt. Die Steigung kann auch veränderlich sein.

Die Steigung legt fest, wie stark sich die Vorlauftemperatur bei einer Änderung der Außentemperatur verändern soll. Die Steigung kann steil (siehe H3) oder flach (siehe H1 und H2) ausfallen. Das hängt unter anderem von einer Raumsolltemperatur und einem energetischen Zustand des Gebäudes ab. Verliert das zu beheizende Gebäude dank guter Dämmung nur wenig Wärme, reicht eine flache Kurve (z.B. H1 oder H2). Sind die Wärmeverluste über die Gebäudehülle aber groß, muss die Steigung steiler eingestellt werden (z.B. H3), um Komforteinbußen vorzubeugen.

Während die Steigung das Verhalten der Heizkurve bei Änderung der Außentemperatur beeinflusst, lässt sich mithilfe der Parallelverschiebung die Vorlaufsolltemperatur bei konstanter Außentemperatur nach oben oder unten korrigieren. Ist es in den Räumen des Gebäudes beispielsweise grundsätzlich kühler als erwünscht, kann zum Ausgleich die Parallelverschiebung der Heizkurve angehoben werden (z.B. von H1 zu H2). Ist es in den Räumen des Gebäudes hingegen grundsätzlich zu warm, so muss die Parallelverschiebung verringert werden (z.B. H2 zu H1).

In der deutschen Offenlegungsschrift DE 43 30 063 A1 wird eine Formel zum Berechnen optimierter Parameter einer Heizkurve eines Heizungsreglers in einer Heizungsanlage beschrieben. Die deutsche Offenlegungsschrift DE 10 2014 203 718 A1 offenbart ein Modul, das unter Berücksichtigung wetterabhängiger Daten den Betrieb einer Heizungsanlage optimieren soll, indem zum Beispiel die Heizkurve angepasst wird.

Die DE 10 2017 205 033 A1 offenbart ein Verfahren zum internetgestützten Optimieren von Regelparametern eines Reglers oder einer Steuerung für eine HLKK-Anlage. Datenpakete mit Betriebsparametern der HLKK-Anlage werden regelmäßig an einen Server übertragen, der die Datenpakete speichert und statistisch auswerten kann. Anhand der Datenpakete und/oder voriger Regelparameter können optimierte Regelparameter berechnet und an eine Steuerung der HLKK-Anlage übertragen werden. Aus diese Weise können die Regelparameter insbesondere iterativ optimiert werden

Auf der URL "https://energie-effizient-sparen.de/fachbeitraege/heizkurve-richtig-einstellen/ #:>:text=Vorgehensweise%20Die%20Heizk%C3%B6E6rperventile%20sollen%20offen,warm %E2%80%9C%2C%20wenn%20es%20k%C3%A4Iter%20ist" beschreibt der Artikel "Heizkurve richtig einstellen" ein konsekutives Einstellen der Heizkurve durch den Nutzer. Heizkörperventile sollen offen sein; Außentemperatur und Vorlauftemperatur werden erfasst, und Abweichungen werden als "zu warm"/"zu kalt" dokumentiert. Die Vorlauftemperatur wird über Soll-Raumtemperatur bzw. Parallelverschiebung angepasst; eine Änderung der Steilheit wird nur bei sehr niedrigen Außentemperaturen empfohlen.

Das Optimieren der Heizkurve ist jedoch ein relativ komplizierter Vorgang, der in der Regel Fachkenntnisse voraussetzt und viel Zeit in Anspruch nehmen kann. Für einen Endkunden als Betreiber eines Heizungssystems ist das Durchführen einer Heizkurvenoptimierung daher in der Regel nicht ohne Hilfe durch einen Fachmann möglich.

Der vorliegenden Erfindung liegt die Aufgabe zugrunde, die im Stand der Technik vorhandenen Mängel zu lösen. Insbesondere soll ein Verfahren zum Optimieren einer Heizkurve eines Wärmeerzeugers in einem Heizungssystem angegeben werden, das es einem Nutzer bzw. Betreiber des Heizungssystems erlaubt, mittels einer geführten Mensch-Maschine-Interaktion über eine graphische Benutzeroberfläche, die Heizkurve des Wärmeerzeugers zu optimieren.

Gemäß einem ersten Aspekt der vorliegenden Offenbarung gelingt die Lösung der erfindungsgemäßen Aufgabe durch das Verfahren nach Anspruch 1. Weitere Aspekte sind Gegenstand der abhängigen Ansprüche, der folgenden Beschreibung von Ausführungsbeispielen und der angehängten Zeichnungen.

Ein erfindungsgemäßer Wärmeerzeuger, erhitzt ein fluides Wärmeträgermedium auf eine Vorlauftemperatur. Das fluide Wärmeträgermedium fließt über einen hydraulischen Heizkreis mit einem Vorlauf und einem Rücklauf durch einen oder mehrere Heizkörper, um mindestens einen Raum in einem Gebäude zu heizen. Als fluides Wärmeträgermedium kann beispielsweise Wasser verwendet werden.

Wie oben ausgeführt, beschreibt die Heizkurve anhand einer Steigung und einer Parallelverschiebung eine Abhängigkeit zwischen der Vorlauftemperatur und einer Außentemperatur des Gebäudes. Die Außentemperatur kann beispielsweise mittels (mindestens) eines Außentemperatursensors ermittelt werden. Alternativ oder zusätzlich können Informationen über die Außentemperatur beispielsweise auch über ein Netzwerk empfangen werden.

Jeder Heizkörper des Heizungssystems weist ein manuell einstellbares Thermostatventil oder ein elektronisch regelbares Thermostatventil zum Einstellen eines Volumenstroms des Wärmeträgermediums durch den Heizkörper auf.

Der Wärmeerzeuger kann über eine geeignete Schnittstelle kommunikativ mit einem Netzwerk verbunden sein. Über das Netzwerk kann ein Wert der Steigung und/oder ein Wert der Parallelverschiebung ausgelesen und/oder eingestellt werden. Beispielsweise ist die Schnittstelle ein Internet-Gateway, über das der Wärmeerzeuger mit einem zentralen Server kommunizieren kann.

Der Server kann über die Schnittstelle eine Vielzahl von Parametern einschließlich der Werte der Steigung und der Parallelverschiebung vom Wärmeerzeuger auslesen bzw. empfangen. Entsprechend kann der Wärmeerzeuger Parameter vom Server empfangen, zum Beispiel um neue Werte (im Folgenden auch als Parameter bezeichnet) der Steigung und/oder der Parallelverschiebung einzustellen. Somit kann über die Schnittstelle die aktuelle Heizkurve des Wärmeerzeugers ausgelesen werden bzw. eine neue Heizkurve am Wärmeerzeuger eingestellt werden.

Das erfindungsgemäße Verfahren zum Optimieren der Heizkurve kann insbesondere als Anwendung auf einem portablen Endgerät eines Benutzers ausgeführt werden. Der Begriff "Benutzer" wird im Folgenden für einen Betreiber oder Endverbraucher des Heizungssystems bzw. des Wärmeerzeugers verwendet. Das Endgerät kann insbesondere ein Smartphone, ein Laptop, ein Tablet oder ein sonstiges internetfähiges Gerät mit einem Display und einer Eingabeeinrichtung (z.B. Touch-Screen und/oder Tastatur und/oder Trackpad und/oder Maus) sein.

Bevor das eigentliche Verfahren ausgeführt wird, kann eine Reihe von Bedingungen abgefragt werden, die beispielsweise bestimmen, ob die Randbedingungen stimmen oder ob sich ein Durchführen des Verfahrens überhaupt lohnen kann. Diese Bedingungen werden weiter unten im Einzelnen beschrieben.

In einem Schritt des Verfahrens wird eine graphische Benutzeroberfläche auf dem Endgerät des Benutzers als Mensch-Maschine-Schnittstelle zum Eingeben und/oder Ausgeben von Informationen angezeigt. Hierzu kann insbesondere eine dezidierte Anwendung ("App") auf dem Endgerät ausgeführt werden. Alternativ kann die Anwendung auch über einen Internetbrowser ausgeführt werden. Die Anwendung gibt insbesondere Handlungsanweisungen an den Benutzer aus und kann eingegebene Daten vom Benutzer empfangen und beispielsweise an den Server übertragen. Die Anwendung dient somit als Front-End für ein Programm, das als Back-End auf dem Server ausgeführt wird.

In einem Verfahrensschritt wird entweder eine Handlungsanweisung über die graphische Benutzeroberfläche an den Benutzer ausgegeben, alle Thermostatventile manuell zu öffnen, oder es wird ein Regelsignal zum automatischen Öffnen der elektronischen Thermostatventile ausgegeben. Wenn im Heizungssystem sowohl manuell einstellbare Thermostatventile und elektronisch regelbare Thermostatventile vorhanden sind, werden sowohl die Handlungsanweisung als auch das Regelsignal ausgegeben, um alle Thermostatventile vollständig zu öffnen.

Das vollständige Öffnen aller Thermostatventile ist wichtig, um einen maximal möglichen Volumenstrom (bzw. Massenstrom) des Wärmeträgermediums durch die Heizkörper zu ermöglichen. Je höher der durch die Heizkörper fließende Volumenstrom ist, desto mehr Wärme kann der Heizkörper in den Raum übertragen. Eine gewünschte Raumsolltemperatur kann bei einem höheren Volumenstrom somit bei einer geringeren Vorlauftemperatur erreicht werden.

Nachdem der Benutzer alle Thermostatventile vollständig manuell geöffnet hat, kann der Benutzer über die graphische Benutzeroberfläche eine entsprechende Rückmeldung eingeben, um das Öffnen zu bestätigen. Für den Fall, das elektronische Thermostatventile vorhanden sind, kann die graphische Benutzeroberfläche eine entsprechende Anzeige darstellen, um dem Benutzer zu veranschaulichen, dass diese elektronischen Thermostatventile automatisch geöffnet wurden.

Nach dem Öffnen der Thermostatventile muss abgewartet werden, bis sich ein thermisches Gleichgewicht eingestellt hat. Diese Wartezeit kann bis zu mehreren Stunden in Anspruch nehmen. Entweder kann eine vorgegebene Wartezeit voreingestellt sein, oder es können mittels Raumtemperatursensoren und/oder Rücklauftemperatursensoren im Rücklauf des Heizungssystems mindestens eine Raumisttemperatur und/oder eine Rücklauftemperatur gemessen werden, um festzustellen, ob das thermische Gleichgewicht in ausreichender Weise erreicht wurde. Die graphische Benutzeroberfläche kann dem Benutzer eine erwartete Dauer bzw. eine verbleibende Dauer dieses Zeitraums anzeigen.

In einem folgenden Rückmeldungsschritt, wird nach Abwarten des festgelegten Zeitraums abgefragt, ob eine Raumisttemperatur in mindestens einem Raum oder in einer Vielzahl von Räumen oder in allen Räumen jeweils eine Raumsolltemperatur unterschreitet oder überschreitet oder die jeweilige Raumisttemperatur der Raumsolltemperatur entspricht. Diese Abfrage kann in dem Fall, dass Raumtemperatursensoren vorhanden sind, automatisch erfolgen, wobei dem Benutzer das Ergebnis graphisch dargestellt werden kann. Alternativ kann der Benutzer die Rückmeldung eingeben. Hierbei kann der Benutzer insbesondere qualitative Angaben machen, also angeben, ob es in mindestens einem Raum "zu warm" bzw. "zu kalt" ist oder ob die Raumisttemperatur in allen Räumen wie gewünscht ist. Ferner kann die Anwendung so eingerichtet sein, dass der Benutzer angibt, in wie vielen, bzw. in welchem Raum oder welchen Räumen es "zu warm" oder zu "kalt ist".

Wenn Raumtemperatursensoren vorhanden sind, kann die Optimierung der Heizkurve auch bei manuellen Thermostatventilen im Wesentlichen automatisch erfolgen. Hierzu muss der Benutzer lediglich die Thermostatventile manuell öffnen und eine Raumsolltemperatur vorgeben. Wenn die Heizkurvenparameter optimiert sind, kann dies dem Benutzer in der Anwendung angezeigt werden. Anschließend kann der Benutzer gegebenenfalls eine Rückmeldung geben, falls es in einem der Räume noch "zu warm" oder "zu kalt" ist oder ob die Raumisttemperatur in allen Räumen wie gewünscht erreicht wurde. Die qualitativen Angaben können auch mit einer Gewichtung versehen sein, wie zum Beispiel "viel zu warm" oder "viel zu kalt" oder "etwas zu warm" oder "etwas zu kalt". Diese qualitativen Angaben mit Gewichtung können dann in vorgegebene Temperaturabweichungen von beispielsweise einem Kelvin bzw. zwei Kelvin übersetzt werden.

In einer bevorzugten Ausführung kann der Benutzer zusätzlich zur qualitativen Angabe (oder stattdessen) einen geschätzten Wert der Abweichung in Kelvin bzw. Grad Celsius in der Anwendung eingeben, beispielsweise "ein Kelvin zu warm" oder "zwei Grad zu kalt".

Falls die Raumisttemperatur in allen Räumen der Raumsolltemperatur entspricht, bzw. wenn der Benutzer angibt, dass die Raumisttemperatur in allen Räumen "angenehm" ist, kann das Verfahren beendet werden. Die aktuell eingestellte Heizkurve kann dann als optimale Heizkurve abgespeichert werden.

Falls die Raumisttemperatur nicht in allen Räumen der Raumsolltemperatur entspricht, wird ein Optimierungsschritt durchgeführt, wobei ein optimierter Wert der Steigung und/oder ein optimierter Wert der Parallelverschiebung ermittelt werden. Die optimierte Steigung und/oder Parallelverschiebung werden insbesondere in Abhängigkeit der Abweichung der Raumisttemperatur von der Raumsolltemperatur ermittelt. Wenn Raumtemperatursensoren vorhanden sind, kann ein genauer Wert der Abweichung ermittelt werden. Die optimierten Parameter können insbesondere auch in Abhängigkeit davon ermittelt werden, ob es in nur einem Raum oder in mehreren oder allen Räumen zu einer Abweichung der Raumisttemperatur zur Raumsolltemperatur kommt.

Anschließend können die optimierten Parameter im Wärmeerzeuger eingestellt werden. Hierzu werden die optimierten Parameter über das Netzwerk an den Wärmeerzeuger übertragen.

Der Rückmeldungsschritt und der Optimierungsschritt werden so oft wiederholt, bis als Zielbedingung erfüllt ist, dass die Raumisttemperatur in mindestens einem Raum der Raumsolltemperatur entspricht, bzw. bis der Benutzer über die Mensch-Maschine-Schnittstelle eine Eingabe macht (eine positive Rückmeldung gibt), dass in allen Räumen die Raumisttemperatur wie gewünscht ist, also um zu bestätigen, dass die Zielbedingung erfüllt ist.

Das Gebäude kann eine erste Anzahl beheizbarer Räume aufweisen, wobei jeder beheizbare Raum mindestens einem Heizkörper mit mindestens einem Thermostatventil aufweist. Die erste Anzahl kann größer als oder gleich zwei sein. Es kann also eine Vielzahl beheizter Räume im Gebäude vorhanden sein. Im Rückmeldungsschritt wird für mindestens einen der beheizbaren Räume abgefragt, ob die Raumisttemperatur der Raumsolltemperatur entspricht. Insbesondere kann für eine zweite Anzahl der Räume abgefragt werden, ob die jeweilige Raumisttemperatur der Raumsolltemperatur entspricht. Hierbei ist die zweite Anzahl gleich groß wie oder kleiner als die erste Anzahl. Es kann also für nur einen, für alle, oder für mehr als einen aber weniger als alle Räume eine Abfrage der Raumisttemperatur durchgeführt werden. Die oben genannte Zielbedingung kann entsprechend angepasst werden, so dass die Raumisttemperatur in mehr als einem Raum oder in allen Räumen der Raumsolltemperatur entsprechen soll.

Vorzugsweise kann vor Ausführen des Verfahrens eine Vielzahl von Randbedingungen abgefragt werden, die erfüllt sein müssen, damit ein Durchführen des Verfahrens sinnvoll ist. Hierfür kann mindestens einer der folgenden Parameter, wie zum Beispiel aktuelles Datum, aktuelle Außentemperatur, aktuelle Steigung der Heizkurve, aktuelle Parallelverschiebung der Heizkurve, Gerätetyp bzw. Modell des Wärmeerzeugers, aktuelle Vorlauftemperatur usw. abgefragt und mit jeweiligen Vergleichswerten verglichen werden. Diese Abfrage kann als Startbedingung in der Anwendung programmiert sein. Die Vergleichswerte können beispielsweise vom Server abgefragt werden.

Beispielsweise wird das Verfahren in Abhängigkeit der Jahreszeit durchgeführt. Insbesondere ist ein Durchführen des Verfahrens nur in der kalten Jahreszeit sinnvoll, wenn die Heizung in Betrieb ist, und wenn über die gesamte Dauer des Verfahrens ausreichend niedrige Außentemperaturen zu erwarten sind. Als Anfangsbedingung zum Durchführen des Verfahrens kann somit eine Abfrage des Datums erfolgen.

Vorzugsweise wird das Verfahren nur durchgeführt, wenn anhand der aktuell eingestellten Steigung und/oder der aktuell eingestellten Parallelverschiebung erkannt wird, dass Optimierungspotenzial vorhanden ist. Hierfür können insbesondere ein Grenzwert der Steigung und/oder ein Grenzwert der Parallelverschiebung als Bedingung für das Durchführen Optimierung vorgegeben werden. Beispielsweise wird das Verfahren nur dann durchgeführt, wenn die zuvor eingestellte Steigung und/oder die die zuvor eingestellte Parallelverschiebung größer als ein jeweiliger Grenzwert sind. Entsprechend kann ein Grenzwert für die aktuelle Vorlauftemperatur abgefragt werden.

Wenn eine aktuell gemessene Außentemperatur in einem ersten Temperaturbereich liegt, wird in einem bevorzugen Verfahren beim Optimierungsschritt nur der optimierte Wert der Parallelverschiebung in Abhängigkeit der Abweichung der Raumisttemperatur von der Raumsolltemperatur ermittelt. Der erste Temperaturbereich entspricht vorzugsweise einem Übergangsbereich von beispielsweise 10 bis 20°C Außentemperatur. Je nach geographischem Standort und/oder in Abhängigkeit einer Wärmedämmung des Gebäudes kann der erste Temperaturbereich auch bei höheren oder tieferen Temperaturen liegen.

Wenn die aktuell gemessene Außentemperatur in einem zweiten Temperaturbereich, der unter dem ersten Temperaturbereich liegt, kann vorzugsweise nur der optimierte Wert der Steigung in Abhängigkeit der Abweichung der Raumisttemperatur von der Raumsolltemperatur im Optimierungsschritt ermittelt werden. Beispielsweise liegt der zweite Temperaturbereich bei Temperaturen unter 10°C. Je nach geographischem Standort und/oder in Abhängigkeit einer Wärmedämmung des Gebäudes kann der zweite Temperaturbereich auch bei höheren oder tieferen Temperaturen liegen.

In einem bevorzugten Verfahren werden im Rücklauf des Heizkreises ein Volumenstrom (bzw. Massenstrom) und/oder eine Rücklauftemperatur des fluiden Wärmeträgermediums gemessen. Durch Messen des Volumenstroms und der Rücklauftemperatur kann unter Berücksichtigung der Vorlauftemperatur eine abgegebene Wärmemenge ermittelt werden. Insbesondere bei Kenntnis der Außentemperatur und der Raumisttemperaturen kann unter anderem berechnet werden, wie gut das Gebäude isoliert ist. Gebäude mit einer schlechten Wärmedämmung benötigen in der Regel eine höhere Steigung und/oder eine höhere Parallelverschiebung, um die Raumsolltemperatur zuverlässig zu erreichen.

Die optimierten Parameter der Heizkurve können vorzugsweise in Abhängigkeit des Volumenstroms im Rücklauf und der Rücklauftemperatur ermittelt werden. Weiter vorzugsweise kann nach dem Öffnen der Thermostatventile anhand des Volumenstroms im Rücklauf und/oder anhand der Rücklauftemperatur bestimmt wird, ob alle Thermostatventile voll geöffnet sind.

Ferner können im Optimierungsschritt die optimierten Werte der Steigung und/oder der Parallelverschiebung in Abhängigkeit der Rücklauftemperatur oder einer zeitlichen Änderung der Rücklauftemperatur ermittelt werden.

In einem bevorzugten Verfahren kann vor dem Öffnen der Thermostatventile eine Anweisung an den Benutzer ausgegeben werden, die aktuellen Stellwerte der manuell einstellbaren Thermostatventile einzugeben. Sind elektronisch regelbare Thermostatventile vorhanden, so können die aktuellen Stellwerte der elektronisch regelbaren Thermostatventile automatisch erfasst werden. Anhand der aktuellen Stellwerte (vor dem Optimieren) kann ermittelt werden, wie nah die aktuellen Heizkurvenparameter bei ihren jeweiligen optimierten Werten sind. Insbesondere je weiter die Thermostatventile vor dem Verfahren bereits geöffnet waren, desto geringer kann eine gegebenenfalls notwendige Änderung der Heizkurvenparameter sein.

Die optimierten Werte der Steigung und/oder der Parallelverschiebung können im Optimierungsschritt vorzugsweise in Abhängigkeit der aktuellen Stellwerte der Thermostatventile ermittelt werden. Je größer die aktuellen Stellwerte der Thermostatventile vor dem Verfahren waren, desto geringer kann gegebenenfalls eine notwendige Änderung der Heizkurvenparameter ausfallen.

In einer bevorzugten Ausführung werden vor dem Ausführen der Optimierung die aktuell eingestellte Steigung und die aktuell eingestellte Parallelverschiebung in einer Speichereinrichtung des Wärmeerzeugers (bzw. der Regeleinrichtung) und/oder Parallelverschiebung in einer Speichereinrichtung des Servers gespeichert. Somit können die ursprünglichen Heizkurvenparameter als Rückfallparameter abgerufen werden, falls eine Rückkehr in den ursprünglichen Betriebszustand gewünscht oder notwendig sein sollte.

Falls nach mindestens einem Optimierungsschritt (vorzugsweise nach mehreren Optimierungsschritten) festgestellt wird, dass die Raumisttemperatur in nur einem Raum einer Vielzahl von Räumen größer als die Raumsolltemperatur ist, kann eine Anweisung an den Benutzer zum manuellen Schließen und/oder ein Regelsignal zum automatischen Schließen der Thermostatventile der Heizkörper in dem einen Raum ausgegeben werden, um einen Betrag, der in Abhängigkeit von der Abweichung der Raumisttemperatur von der Raumsolltemperatur ermittelt wird. Hierdurch kann ein hydraulischer Abgleich zwischen dem einen Raum und den anderen der Vielzahl von Räumen durchgeführt werden.

Wenn nach Durchführen mindestens eines Optimierungsschritts festgestellt wird, dass eine Abweichung der Raumisttemperatur von der Raumsolltemperatur in verschiedenen Räumen unterschiedlich groß ist, kann in einem bevorzugten Verfahren eine Anweisung zum Entlüften eines oder mehrerer Heizkörper an den Benutzer ausgegeben werden. In anderen Worten, anhand der unterschiedlich großen Abweichung der jeweiligen Raumisttemperatur von der Raumsolltemperatur kann erkannt werden, dass ein Entlüften der jeweiligen Heizkörper notwendig ist.

Ein erfindungsgemäßes Heizungssystem zum Beheizen von Räumen in einem Gebäude umfasst einen oder mehrere Heizkörper und den oben beschriebenen Wärmeerzeuger, den Server und das Endgerät. Jeder Heizkörper weist ein manuell einstellbares oder ein elektronisch regelbares Thermostatventil zum Einstellen eines Volumenstroms eines Wärmeträgermediums durch den Heizkörper auf.

Der Wärmeerzeuger erhitzt das fluide Wärmeträgermedium auf eine Vorlauftemperatur. Das Wärmeträgermedium fließt über einen hydraulischen Heizkreis mit einem Vorlauf und einem Rücklauf durch den einen Heizkörper oder die Vielzahl von Heizkörpern, um mindestens einen Raum im Gebäude zu heizen.

Die Regeleinrichtung des Wärmeerzeugers, der Server und das Endgerät sind jeweils über geeignete Schnittstellen kommunikativ mit dem Netzwerk verbunden. Das Heizungssystem ist eingerichtet, ein erfindungsgemäßes Verfahren auszuführen.

### KURZBESCHREIBUNG DER FIGUREN

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
**Figur** 1 illustriert beispielhafte Heizkurven.
**Figur** 2 illustriert ein Heizungssystem gemäß einem Ausführungsbeispiel der Erfindung.
**Figur** 3 illustriert ein Verfahren gemäß einem ersten Ausführungsbeispiel der Erfindung.

### AUSFÜHRLICHE BESCHREIBUNG DER ERFINDUNG ANHAND VON AUSFÜHRUNGSBEISPIELEN

Bei der nachfolgenden Beschreibung einer bevorzugten Ausführungsform der vorliegenden Erfindung bezeichnen gleiche Bezugszeichen gleiche oder vergleichbare Komponenten.

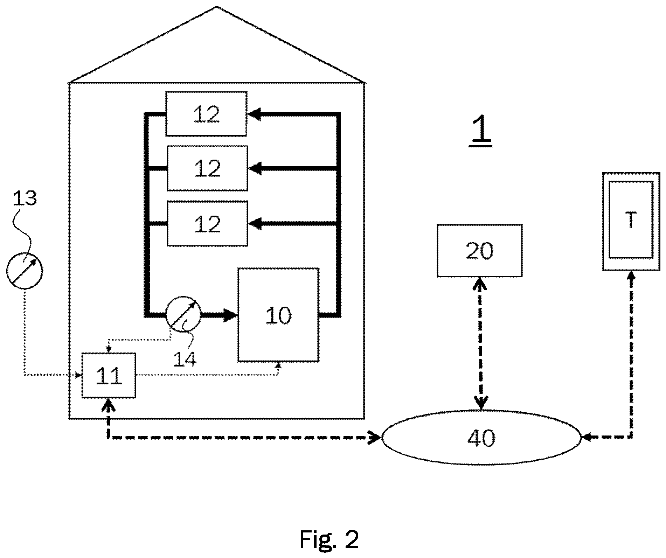

Fig. 2 illustriert ein beispielhaftes erfindungsgemäßes Heizungssystem 1 zum Beheizen von Räumen in einem Gebäude. Das Gebäude weist eine Vielzahl von Räumen auf, in denen jeweils mindestens ein Heizkörper 12 angeordnet ist, wovon in Fig. 1 beispielhaft drei dargestellt sind. Beispielsweise im Keller des Gebäudes ist ein Wärmeerzeuger 10 angeordnet. Über einen Vorlauf fließt ein vom Wärmeerzeuger 10 erhitztes Wärmeträgermedium zu den Heizkörpern 12. Über einen Rücklauf fließt das Wärmeträgermedium zurück zum Wärmeerzeuger 10. Zum Erzeugen des Volumen- bzw. Massenstroms des Wärmeträgermediums kann beispielsweise im Vorlauf und/oder im Rücklauf eine geeignete Pumpe angeordnet sein (nicht dargestellt).

Eine Regeleinrichtung 11 regelt und/oder steuert einen Betriebszustand des Wärmeerzeugers 10. Die Regeleinrichtung 11 ist über eine geeignete Schnittstelle kommunikativ mit einem Netzwerk 40, zum Beispiel dem Internet, verbunden. Mit dem Netzwerk sind ferner ein Server 20 und ein Endgerät T eines Benutzers kommunikativ verbunden. Hierzu weisen der Server 20 und das Endgerät T jeweils geeignete Schnittstellen auf. Über das Netzwerk 40 können die Regeleinrichtung 11, der Server 20 und das Endgerät T Daten senden bzw. empfangen.

Jeder Heizkörper 12 weist jeweils ein manuell einstellbares oder ein elektronisch regelbares Thermostatventil zum Einstellen des Volumenstroms des Wärmeträgermediums durch den Heizkörper 12 auf. Elektronisch regelbare Thermostatventile können beispielsweise drahtlos mit der Regeleinrichtung 11 kommunizieren, so dass Daten wie bzw. ein Regelsignal oder Steuersignal oder Messwerte übertragen werden können.

Ein Außentemperatursensor 13 ist außerhalb des Gebäudes angeordnet und misst eine Außentemperatur. Der Außentemperatursensor 13 überträgt einen Messwert der Außentemperatur an die Regeleinrichtung 11. Zusätzlich bzw. alternativ kann die Regeleinrichtung 11 auch Außentemperaturwerte vom Server 20 oder vom Endgerät T des Benutzers empfangen. Die Regeleinrichtung 11 kann den Wärmeerzeuger 10 in Abhängigkeit der Außentemperatur regeln oder steuern. Bei dem Wärmeerzeuger 10 handelt es sich somit um einen witterungsgeführten Wärmeerzeuger 10. Der witterungsgeführte Betrieb erfolgt unter Verwendung einer Heizkurve.

In der beispielhaften Darstellung der Fig. 2 ist ein Rücklauftemperatursensor 14 im Rücklauf angeordnet, der eine Rücklauftemperatur des Wärmeträgermediums misst. Die Regeleinrichtung 11 kann einen Messwert der Rücklauftemperatur vom Rücklauftemperatursensor 14 empfangen und weiterverarbeiten.

Das in Fig. 2 illustrierte beispielhafte Heizungssystem 1 ist eingerichtet, ein erfindungsgemäßes Verfahren zum Optimieren der Heizkurve des Wärmeerzeugers 10 durchzuführen, das im Folgenden beschrieben wird.

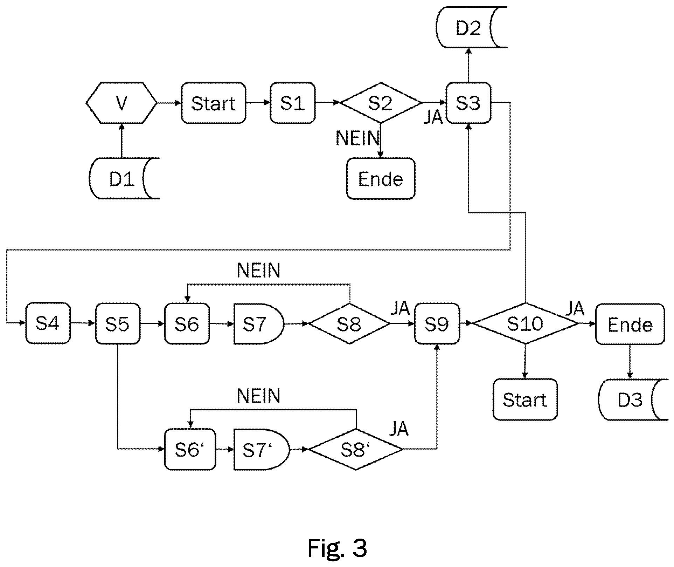

Ein Ausführungsbeispiel eines erfindungsgemäßen Verfahrens zum Optimieren einer Heizkurve wird anhand des in Fig. 3 dargestellten Flussdiagramms beschrieben. Das Ausführungsbeispiel der Fig. 3 betrifft insbesondere ein Verfahren zum Optimieren der Steigung und/oder der Parallelverschiebung der Heizkurve. Das beschriebene Verfahren wird im Wesentlichen als geführte Mensch-Maschine-Interaktion ausgeführt unter Verwendung einer graphischen Benutzeroberfläche auf einem Endgerät T des Benutzers, das als Mensch-Maschine-Schnittstelle dient. Hierzu werden dem Benutzer Anweisungen in der graphischen Benutzeroberfläche dargestellt und der Benutzer kann Rückmeldungen eingeben. Das Endgerät T des Benutzers ist insbesondere ein Smartphone oder Tablet-Computer auf dem eine Anwendung (App) ausgeführt wird. Dabei kommuniziert das Endgerät T über das Netzwerk 40 mit dem Server 20 und/oder der Regeleinrichtung 11.

Das Verfahren beginnt in Schritt V mit einem Vorbereitungsprozess. Hierbei kann z.B. eine Vielzahl von Anfangsbedingungen bzw. Randbedingungen abgefragt werden, um zu entscheiden, ob das Verfahren ausgeführt werden soll. Anhand dieser Abfrage kann insbesondere festgestellt werden, ob ein Optimierungspotenzial vorhanden ist und ob entsprechend ein Ausführen des Verfahrens sinnvoll ist.

Die Anfangs- bzw. Randbedingungen können unter anderem eine Jahreszeit, ein Gerätetyp bzw. Modell des Wärmeerzeugers, aktuell eingestellte Heizkurvenparameter (Steigung und/oder Parallelverschiebung) und/oder eine hydraulische Auslegung des Heizungssystems sowie das Vorhandensein einer Einzelraumregelung betreffen.

Für das Durchfahren des Schritts V kann zunächst eine Vielzahl von Daten D1 ausgelesen werden, wie zum Beispiel eine aktuelle Außentemperatur, eine aktuelle Vorlauftemperatur, aktuell eingestellte Heizkurvenparameter, aktuelle Stellgrader der Thermostatventile, aktuelle Raumisttemperaturen, ein aktuelles Datum und/oder eine aktuelle Rücklauftemperatur.

Um eine Entscheidung bezüglich des Durchführens des Verfahrens zu treffen, können die abgefragten Anfangs- bzw. Randbedingungen mit entsprechenden Vergleichswerten verglichen werden. Die Vergleichswerte können in der Regeleinrichtung 11 gespeichert sein und/oder vom Server 20 abgefragt werden.

Beispielsweise wird das Verfahren in Abhängigkeit der Jahreszeit durchgeführt. Insbesondere ist ein Durchführen des Verfahrens nur in der kalten Jahreszeit (z.B. Herbst oder Winter) sinnvoll, wenn das Gebäude beheizt wird, und wenn über die gesamte Dauer des Verfahrens ausreichend niedrige Außentemperaturen zu erwarten sind. Als Anfangsbedingung zum Durchführen des Verfahrens kann somit eine Abfrage des Datums erfolgen, das mit einem voreingestellten Datumsbereich verglichen wird.

Vorzugsweise wird das Verfahren nur durchgeführt, wenn anhand der aktuell eingestellten Steigung und/oder der aktuell eingestellten Parallelverschiebung erkannt wird, dass Optimierungspotenzial vorhanden ist. Hierfür können insbesondere ein Grenzwert der Steigung und/oder ein Grenzwert der Parallelverschiebung als Bedingung für das Durchführen Optimierung vorgegeben werden. Beispielsweise wird das Verfahren nur dann durchgeführt, wenn die zuvor eingestellte Steigung und/oder die die zuvor eingestellte Parallelverschiebung größer als ein jeweiliger Grenzwert sind. Entsprechend kann ein Grenzwert für die aktuelle Vorlauftemperatur abgefragt werden.

Wenn eine aktuell gemessene Außentemperatur in einem ersten Temperaturbereich liegt, kann beim Optimierungsschritt vorzugsweise nur der optimierte Wert der Parallelverschiebung in Abhängigkeit der Abweichung der Raumisttemperatur von der Raumsolltemperatur ermittelt werden. Der erste Temperaturbereich entspricht insbesondere einem Übergangsbereich von beispielsweise 10 bis 20°C Außentemperatur. Je nach geographischem Standort und/oder in Abhängigkeit einer Wärmedämmung des Gebäudes kann der erste Temperaturbereich auch bei höheren oder tieferen Temperaturen liegen.

Wenn die aktuell gemessene Außentemperatur in einem zweiten Temperaturbereich, der unter dem ersten Temperaturbereich liegt, kann vorzugsweise nur der optimierte Wert der Steigung in Abhängigkeit der Abweichung der Raumisttemperatur von der Raumsolltemperatur im Optimierungsschritt ermittelt werden. Beispielsweise liegt der zweite Temperaturbereich bei Temperaturen unter 10°C. Je nach geographischem Standort und/oder in Abhängigkeit einer Wärmedämmung des Gebäudes kann der zweite Temperaturbereich auch bei höheren oder tieferen Temperaturen liegen.

Eine Entscheidung darüber, ob die Parallelverschiebung oder die Steigung optimiert werden soll, kann insbesondere in Schritt S5, der später beschrieben wird, getroffen werden. Diese kann beispielsweise wie oben beschrieben in Abhängigkeit der aktuellen Außentemperatur erfolgen.

Wenn die Abfrage in Schritt V ergibt, dass ein Durchführen des Verfahrens sinnvoll ist, kann dem Benutzer in der graphischen Benutzeroberfläche angezeigt werden, dass ein Verfahren zum Optimieren der Steigung durchführbar ist. Bestätigt der Benutzer im Schritt "Start", dass das Verfahren durchgeführt werden soll, so beginnt das Verfahren mit Schritt S1. In Schritt S1 können dem Benutzer beispielsweise Informationen über den Ablauf des Verfahrens, Instruktionen, sowie eine zu erwartende Dauer angezeigt werden. Ferner können in Schritt S1 die aktuell eingestellten Heizkurvenparameter als Rückfallposition abgespeichert werden.

Im nächsten Schritt S2 können verschiedene Anweisungen über die graphische Benutzeroberfläche an den Benutzer ausgegeben werden. Beispielsweise kann abgefragt werden, welche Art von Heizkörpern zum Heizen der Räume verwendet werden. Als Antwort kann der Benutzer beispielsweise "Radiatoren" und/oder "Fußbodenheizung" angeben. Ferner kann der Benutzer aufgefordert werden, Angaben dazu zu machen, welche Art von Thermostatventilen vorhanden sind, insbesondere ob nur manuell einstellbare oder auch elektronisch regelbare Thermostatventile zum Einstellen eines Volumenstroms des Wärmeträgermediums durch die Heizkörper vorhanden sind. Ergibt die Abfrage in S2, dass nur Radiatoren verwendet werden (JA) geht das Verfahren weiter zu Schritt S3. Sind weitere Arten von Heizkörpern vorhanden (NEIN), wird das Verfahren beendet.

In Schritt S3 wird über die graphische Benutzeroberfläche eine Anweisung an den Benutzer ausgegeben, alle Thermostatventile manuell zu öffnen. Zusätzlich oder alternativ kann ein Regelsignal zum automatischen Öffnen elektronisch steuerbarer Thermostatventile erzeugt und ausgegeben werden. Zusätzlich kann eine Anweisung an den Benutzer ausgegeben werden, vor dem Öffnen der Thermostatventile, die aktuellen Stellwerte der manuell einstellbaren Thermostatventile einzugeben, die dann als Datensatz D2 gespeichert werden können. Alternativ werden die aktuellen Stellwerte der elektronisch regelbaren Thermostatventile automatisch ausgelesen.

In Schritt S4 öffnet der Benutzer alle manuell einstellbaren Thermostatventile bis zum maximalen Öffnungsgrad. Zusätzlich oder alternativ werden die elektronisch regelbaren Thermostatventile (wenn vorhanden) automatisch geöffnet. Sobald der Benutzer alle Thermostatventile vollständig geöffnet hat, kann der Benutzer dies bestätigen S4 und das Verfahren geht in Schritt S5 weiter. Bei elektronisch regelbaren Thermostatventilen können diese Abfrage und die Rückmeldung automatisch erfolgen.

Durch das vollständige Öffnen der Thermostatventile in S4 wird der Massen- bzw. Volumenstrom des Wärmeträgermediums durch die Heizkörper erhöht, so dass eine höhere Wärmemenge über die Heizkörper an die Räume abgegeben werden kann. Um eine bestimmte Raumsolltemperatur zu erreichen, kann bei vollständig geöffneten Thermostatventilen eine geringere Vorlauftemperatur des Wärmeträgermediums ausreichend sein. Entsprechend kann die Steigung der Heizkurve reduziert werden.

In S5 wird der Benutzer über den weiteren Verlauf des Verfahrens informiert. Insbesondere wird mitgeteilt, dass der Optimierungsprozess der Steigung oder der Parallelverschiebung gestartet wird und wie lange dieser Prozess dauern kann. Je nach Außentemperatur kann in Schritt S5 entschieden werden, ob die Steigung oder die Parallelverschiebung optimiert werden soll. Diese Entscheidung kann vom Benutzer getroffen werden, beispielweise auf Vorschlag durch die Anwendung. Alternativ kann durch das Backend vorgegeben werden, ob die Steigung oder die Parallelverschiebung optimiert wird.

In Schritt S6 wird der eigentliche Optimierungsprozess durch das Backend durchgeführt. Der Schritt S6 kann beispielsweise vom Server 20 oder von der Regeleinrichtung 11 durchgeführt werden. In Abhängigkeit der vom Benutzer eingegebenen und/oder automatisch erfassten Ausgangsstellwerte der manuell einstellbaren und/oder elektronisch regelbaren Thermostatventile kann der Wert der Steigung der Heizkurve reduziert werden. Ein Ziel des Verfahrens ist es, eine flachere Steigung der Heizkurve zu erreichen.

Insbesondere kann in Schritt S6 ein Mittelwert der ursprünglichen Öffnungsgrade der Thermostatventile bestimmt werden. Entsprechend kann der Wert der Steigung umso stärker reduziert werden, je kleiner der Mittelwert des Öffnungsgrads ist. Der geänderte (reduzierte) Wert der Steigung kann nun an die Regeleinrichtung 11 übertragen werden. Eine geringere Steigung führt bei gegebener Außentemperatur zu einer geringeren Vorlaufsolltemperatur. Entsprechend wird der Wärmeerzeuger 10 nun mit der geringeren Vorlaufsolltemperatur betrieben.

Schritt S7 ist eine Wartezeit. Nach dem Einstellen der optimierten Steigung und der entsprechenden Änderung der Vorlauftemperatur wird abgewartet, bis sich die Raumisttemperaturen entsprechend geändert haben. Hierbei kann eine vorgegebene Zeitdauer abgewartet werden, die üblicherweise einige Stunden betragen kann, beispielsweise zwei oder drei Stunden. Die verbleibende Wartezeit kann dem Benutzer in der graphischen Benutzeroberfläche auf dem Endgerät T angezeigt werden.

Nach dem Abwarten des festgelegten Zeitraums in S7 folgt in Schritt S8 ein Rückmeldungsschritt. Hierbei wird abgefragt, ob eine Raumisttemperatur eine Raumsolltemperatur unterschreitet oder überschreitet oder die Raumisttemperatur der Raumsolltemperatur entspricht. Diese Abfrage kann für einen Raum, eine Vielzahl von Räumen oder für alle beheizten Räume mit Heizkörpern durchgeführt werden und kann insbesondere bei Vorhandensein von Raumtemperatursensoren automatisch erfolgen. Alternativ kann der Benutzer über die graphische Benutzeroberfläche eine entsprechende Rückmeldung geben. Hierbei kann der Benutzer insbesondere qualitative Angaben machen, also angeben, ob es in mindestens einem Raum "zu warm" bzw. "zu kalt" ist oder ob die Raumisttemperatur in allen Räumen jeweils wie gewünscht ist. Ferner kann die Anwendung eingerichtet sein, dass der Benutzer angeben kann, in wie vielen, bzw. in welchem Raum oder in welchen Räumen es "zu warm" oder zu "kalt ist".

Entspricht die Raumisttemperatur in allen Räumen der Raumsolltemperatur (JA in S8) so geht das Verfahren in Schritt S9 weiter. Entspricht die Raumisttemperatur nicht in allen Räumen der Raumsolltemperatur (NEIN in S8) so werden der Optimierungsschritt S6, die Wartezeit S7 und die Auswertung in S8 wiederholt. Die Schritte S6, S7 und S8 können solange wiederholt werden, bis die Abfrage in S8 positiv ist (JA) oder bis eine vorgegebene Anzahl von Wiederholungen erreicht wird.

Ist das Ergebnis von S8, dass mindestens ein Raum zu warm war (Raumisttemperatur größer als Raumsolltemperatur), wird in Schritt S6 die Steigung der Heizkurve weiter reduziert, beispielsweise um einen vorgegebenen Wert oder in Abhängigkeit einer Abweichung der Raumisttemperatur von der Raumsolltemperatur.

Ist das Ergebnis von S8, dass mindestens ein Raum zu kalt war (Raumisttemperatur kleiner als Raumsolltemperatur), wird in Schritt S6 die Steigung der Heizkurve erhöht, beispielsweise um einen vorgegebenen Wert oder in Abhängigkeit einer Abweichung der Raumisttemperatur von der Raumsolltemperatur.

Durch Wiederholen der Schritte S6 bis S8 kann eine iterative Optimierung der Steigung der Heizkurve erfolgen. Dem Benutzer kann dabei jeweils eine Mitteilung auf das Endgerät T gesendet werden, sobald ein Eingreifen bzw. eine Rückmeldung durch den Benutzer notwendig ist. Somit kann der Zeitaufwand für den Benutzer minimiert werden.

In Schritt S9 kann dem Benutzer die neue Heizkurve dargestellt werden bzw. die neuen Heizkurvenparameter können angezeigt werden. Im folgenden Schritt S10 hat der Benutzer dann die Möglichkeit, die neuen Heizkurvenparameter anzunehmen (JA in S10), das Verfahren erneut zu starten (Start) oder zu den in S3 gespeicherten ursprünglichen Heizkurvenparameter zurückzukehren.

Entscheidet der Benutzer in S10, die neuen Heizkurvenparameter anzunehmen (JA in S10), wird das Optimierungsverfahren beendet und die neuen Heizkurvenparameter werden gespeichert (D3).

Der Optimierungsprozess der Parallelverschiebung in Schritten S6', S7; und S8' wird analog zu den oben beschriebenen Schritten S6, S7 und S8 ausgeführt. Je nach Rückmeldung durch den Benutzer oder in Abhängigkeit einer gemessenen Abweichung zwischen Raumisttemperaturen und Raumsolltemperatur kann der Wert der Parallelverschiebung geändert werden. Sind alle Räume "zu warm" (bzw. Raumisttemperaturen sind größer als jeweilige Raumsolltemperaturen) wird der Wert der Parallelverschiebung reduziert. Sind alle Räume "zu kalt" (bzw. Raumisttemperaturen sind kleiner als jeweilige Raumsolltemperaturen) wird der Wert der Parallelverschiebung erhöht.

Ziel der Optimierung ist es, einen Wert zu finden, bei dem alle Räume warm genug sind, bzw. bei dem die Raumisttemperatur jeweils gleich groß (oder größer) wie die Raumsolltemperatur sind. Hierbei kann auch zugelassen werden, dass einige der Räume zunächst wärmer als erwünscht sind. Eine Reduzierung der Parallelverschiebung soll vorzugweise nur dann erfolgen, wenn alle Räume zu warm sind.

Wie bei der Optimierung der Steigung, können die Schritte S6', S7'und S8' so oft wiederholt werden, bis die Raumtemperaturen wie gewünscht sind, oder bis eine vorgegebene Maximalzahl an Wiederholungen erreicht ist.

Wenn das Heizungssystem über entsprechende Sensoren verfügt und im Rücklauf des Heizkreises ein Volumenstrom und/oder eine Rücklauftemperatur des fluiden Wärmeträgermediums gemessen werden, kann im Schritt nach dem Öffnen der Thermostatventile in Schritt S3 anhand des Volumenstroms und/oder anhand der Rücklauftemperatur bestimmt wird, ob alle Thermostatventile tatsächlich geöffnet sind. Falls erkannt wird, dass nicht alle Thermostatventile geöffnet sind, kann beispielsweise eine entsprechende Meldung an den Benutzer ausgegeben werden, mit der Anweisung alle Thermostatventile zu öffnen.

Im Optimierungsschritt S6 bzw. S6' können die optimierten Werte der Steigung und/oder der Parallelverschiebung vorzugsweise in Abhängigkeit einer (zeitlichen) Änderung der Rücklauftemperatur ermittelt werden. Anhand der Rücklauftemperatur bzw. Änderung der Rücklauftemperatur kann z.B. ein Wärmeübertrag an den Raum ermittelt werden. Zusammen mit der Rückmeldung des Benutzers kann so bestimmt werden, ob die Steigung und/oder der Parallelverschiebung erhöht oder reduziert werden müssen.

Das erfindungsgemäße Verfahren ermöglicht somit, die Heizkurve eines Wärmeerzeugers iterativ zu optimieren. Hierbei wird der Benutzer des Heizungssystems durch eine Mensch-Maschine-Schnittstelle mit graphischer Benutzeroberfläche kontinuierlich angeleitet. Dabei werden Informationen über das Verfahren und Handlungsanweisungen an den Benutzer ausgegeben. Ferner kann der Benutzer Daten eingeben und Einstellungen vornehmen. Dies ermöglicht es einem Benutzer des Heizungssystems ohne tiefere technische Vorkenntnisse eine Optimierung der Heizkurve durchzuführen. Ziel der Optimierung ist es, die Vorlauftemperatur und damit den Energieverbrauch des Wärmeerzeugers zu senken.

Je nach Fähigkeiten und Ausstattung des Heizungssystems mit Raumtemperatursensoren, einer Funktion der Einzelraumregelung, elektronisch regelbarer Thermostatventile und dergleichen, kann das Verfahren weiter automatisiert werden, so dass die Interaktion mit dem Benutzer reduziert werden kann.

Um den Benutzer zum Durchführen der Heizkurven-Optimierung zu motivieren und/oder nach dem Durchführen der Optimierung zu belohnen, kann in der graphischen Benutzeroberfläche eine zu erwartende eingesparte Energiemenge und/oder eine entsprechende Kostenersparnis bzw. Einsparung von CO₂-Emissionen angezeigt werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Verfahren zum Optimieren einer Heizkurve eines Wärmeerzeugers (10), der ein fluides Wärmeträgermedium auf eine Vorlauftemperatur erhitzt, das über einen hydraulischen Heizkreis mit einem Vorlauf und einem Rücklauf durch einen oder mehrere Heizkörper (12) fließt, um mindestens einen Raum in einem Gebäude zu heizen, wobei:
die Heizkurve anhand einer Steigung und einer Parallelverschiebung eine Abhängigkeit zwischen der Vorlauftemperatur und einer Außentemperatur des Gebäudes beschreibt;
jeder Heizkörper (12) ein manuell einstellbares Thermostatventil mit einem Einstellkopf oder ein elektronisch regelbares Thermostatventil zum Einstellen eines Volumenstroms des Wärmeträgermediums durch den Heizkörper (12) aufweist;
eine Regeleinrichtung (11) des Wärmeerzeugers (10) über eine Schnittstelle kommunikativ mit einem Netzwerk (40) verbunden ist, um einen Wert der Steigung und/oder einen Wert der Parallelverschiebung auszulesen und/oder einzustellen; und
das Verfahren die folgenden Schritte umfasst:
Vorgeben einer Raumsolltemperatur für den mindestens einen Raum durch einen Benutzer und Erfassen der vorgegebenen Raumsolltemperatur durch die Regeleinrichtung (11);
Erfassen einer aktuellen Raumisttemperatur des mindestens einen Raums durch die Regeleinrichtung (11);
Erfassen einer Außentemperatur durch einen Außentemperatursensor (13) und/oder Erfassen der Außentemperatur von einem mit dem Netzwerk (40) verbundenen Server (20) und/oder Erfassen der Außentemperatur von einem Endgerät (T) des Benutzers und übertragen eines Messwerts der Außentemperatur an die Regeleinrichtung (11);
Anzeigen einer graphischen Benutzeroberfläche auf dem Endgerät (T) des Benutzers als Mensch-Maschine-Schnittstelle zum Eingeben und Ausgeben von Informationen, wobei das Endgerät (T) über das Netzwerk (40) mit der Regeleinrichtung (11) kommuniziert, um Anweisungen an den Benutzer auszugeben und/oder um Eingaben des Benutzers zu empfangen;
Ausgeben einer Anweisung an den Benutzer, die Einstellköpfe aller Thermostatventile manuell auf einen maximalen Einstellgrad zu stellen oder Ausgeben eines Regelsignals durch die Regeleinrichtung (11) zum automatischen Öffnen der elektronischen Thermostatventile;
einen Rückmeldungsschritt, wobei der Benutzer nach Abwarten eines festgelegten Zeitraums für mindestens einen Raum:
über die Benutzeroberfläche abgefragt wird, ob die Raumisttemperatur in dem mindestens einen Raum die vorgegebene Raumsolltemperatur unterschreitet oder überschreitet oder die Raumisttemperatur der Raumsolltemperatur entspricht, und wobei der Benutzer über die Benutzeroberfläche eine Rückmeldung eingibt, um anzugeben, ob es im mindestens einen Raum zu warm oder zu kalt ist oder die Raumisttemperatur wie gewünscht ist; oder
einen Optimierungsschritt, wobei die Regeleinrichtung einen optimierten Wert der Steigung und/oder einen optimierten Wert der Parallelverschiebung in Abhängigkeit der Abweichung der Raumisttemperatur von der Raumsolltemperatur ermittelt und die optimierten Werte im Wärmeerzeuger (10) eingestellt werden,
wobei zunächst in Abhängigkeit der Außentemperatur entschieden wird, ob nur der optimierte Wert der Parallelverschiebung oder nur der optimierte Wert der Steigung ermittelt werden soll,
wobei die Regeleinrichtung den Wert der Parallelverschiebung erhöht, wenn der Benutzer die Rückmeldung "zu kalt" gegeben hat oder den Wert der Parallelverschiebung reduziert, wenn der Benutzer die Rückmeldung "zu warm" gegeben hat oder den Wert der Parallelverschiebung unverändert lässt, wenn der Benutzer die Rückmeldung "wie gewünscht" gegeben hat,
wobei die Regeleinrichtung den Wert der Steigung um einen vorgegebenen Wert reduziert erhöht, wenn der Benutzer die Rückmeldung "zu kalt" gegeben hat oder den Wert der Steigung um einen vorgegebenen Wert reduziert, wenn der Benutzer die Rückmeldung "zu warm" gegeben hat oder den Wert der Steigung unverändert lässt, wenn der Benutzer die Rückmeldung "wie gewünscht" gegeben hat,
wobei im Optimierungsschritt nur der optimierte Wert der Parallelverschiebung ermittelt wird, wenn die erfasste Außentemperatur in einem Bereich von 10 bis 20 °C liegt; oder
wobei im Optimierungsschritt nur der optimierte Wert der Steigung ermittelt wird, wenn die erfasste Außentemperatur weniger als 10 °C beträgt; und
Wiederholen des Rückmeldungsschritt und des Optimierungsschritts bis als Zielbedingung erfüllt ist, dass die Raumisttemperatur in mindestens einem Raum der Raumsolltemperatur entspricht, oder bis eine vorgegebene Anzahl von Wiederholungen erreicht wird.

2. Verfahren nach Anspruch 1, wobei:
wenn die aktuelle Außentemperatur in einem ersten Temperaturbereich liegt, im Optimierungsschritt nur der optimierte Wert der Parallelverschiebung in Abhängigkeit der Abweichung der Raumisttemperatur von der Raumsolltemperatur ermittelt wird; oder
wenn die aktuelle Außentemperatur in einem zweiten Temperaturbereich unter dem ersten Temperaturbereich liegt, im Optimierungsschritt nur der optimierte Wert der Steigung in Abhängigkeit der Abweichung der Raumisttemperatur von der Raumsolltemperatur ermittelt wird.

3. Verfahren nach Anspruch 1 oder 2, wobei:
im Rücklauf des Heizkreises ein Volumenstrom und/oder eine Rücklauftemperatur des fluiden Wärmeträgermediums gemessen werden; und
nach dem Öffnen der Thermostatventile anhand des Volumenstroms und/oder anhand der Rücklauftemperatur bestimmt wird, ob alle Thermostatventile geöffnet sind.

4. Verfahren nach Anspruch 3, wobei im Optimierungsschritt die optimierten Werte der Steigung und/oder der Parallelverschiebung in Abhängigkeit einer Änderung der Rücklauftemperatur ermittelt werden.

5. Verfahren nach einem der vorigen Ansprüche, wobei vor dem Öffnen der Thermostatventile:
eine Anweisung an den Benutzer ausgegeben wird, zum Eingeben aktueller Stellwerte der manuell einstellbaren Thermostatventile; und/oder
aktuelle Stellwerte der elektronisch regelbaren Thermostatventile automatisch erfasst werden; und
im Optimierungsschritt die optimierten Werte der Steigung und/oder der Parallelverschiebung in Abhängigkeit der aktuellen Stellwerte der Thermostatventile ermittelt werden.

6. Verfahren nach einem der vorigen Ansprüche, wobei:
der Benutzer über die Mensch-Maschine-Schnittstelle eine Eingabe macht, um zu bestätigen, dass die Zielbedingung erfüllt ist; oder
die Raumtemperatur in mindestens einem Raum über einen Raumtemperatursensor gemessen und mit der Raumsolltemperatur verglichen wird.

7. Verfahren nach einem der vorigen Ansprüche, wobei:
vor dem Ausführen der Optimierung die Steigung und Parallelverschiebung in einer Speichereinrichtung der Regeleinrichtung (11) des Wärmeerzeugers (10) und/oder eines über eine Schnittstelle kommunikativ mit dem Netzwerk (40) verbundenen Servers (20) gespeichert werden.

8. Verfahren nach einem der vorigen Ansprüche, ferner umfassend:
wenn nach mindestens einem Optimierungsschritt festgestellt wird, dass die Raumisttemperatur in nur einem Raum einer Vielzahl von Räumen größer als die Raumsolltemperatur ist,
Ausgeben einer Anweisung an den Benutzer zum manuellen Schließen und/oder Ausgeben eines Regelsignals zum automatischen Schließen der Thermostatventile der Heizkörper (12) in dem einen Raum, um einen Betrag, der in Abhängigkeit von der Abweichung der Raumisttemperatur von der Raumsolltemperatur ermittelt wird.

9. Verfahren nach einem der vorigen Ansprüche, ferner umfassend:
wenn nach mindestens einem Optimierungsschritt festgestellt wird, dass eine Abweichung der Raumisttemperatur von der Raumsolltemperatur in einer Vielzahl von Räumen unterschiedlich groß ist,
Ausgeben einer Anweisung an den Benutzer zum Entlüften eines oder mehrerer Heizkörper (12).

10. Verfahren nach einem der vorigen Ansprüche, wobei:
das Gebäude eine erste Anzahl beheizter Räume mit jeweils mindestens einem Heizkörper aufweist;
im Rückmeldungsschritt für eine zweite Anzahl der Räume abgefragt wird, ob die jeweilige Raumisttemperatur der Raumsolltemperatur entspricht;
die erste Anzahl größer oder gleich zwei ist; und
zweite Anzahl gleich groß wie oder kleiner als die erste Anzahl ist.

11. Heizungssystem (1) zum Heizen von Räumen in einem Gebäude, umfassend:
einen oder mehrere Heizkörper (12), wobei jeder Heizkörper (12) ein manuell einstellbares oder ein elektronisch regelbares Thermostatventil zum Einstellen eines Volumenstroms eines Wärmeträgermediums durch den Heizkörper (12) aufweist;
einen Wärmeerzeuger (10), der das fluide Wärmeträgermedium auf eine Vorlauftemperatur erhitzt, das über einen hydraulischen Heizkreis mit einem Vorlauf und einem Rücklauf durch den einen oder die mehreren Heizkörper (12) fließt, um mindestens einen Raum im Gebäude zu heizen, wobei
eine Regeleinrichtung (11) des Wärmeerzeugers (10) über eine Schnittstelle kommunikativ mit einem Netzwerk (40) verbunden ist;
ein über eine Schnittstelle kommunikativ mit dem Netzwerk (40) verbundener Server (20);
ein über eine Schnittstelle kommunikativ mit dem Netzwerk (40) verbundenes Endgerät (T) eines Benutzers mit einer Mensch-Maschine-Schnittstelle zum Eingeben und Ausgeben von Informationen, **dadurch gekennzeichnet, dass**
das Heizungssystem (1) eingerichtet ist, ein Verfahren nach einem der Ansprüche 1 bis 10 auszuführen.

## Claims

1. Method for optimizing a heating curve of a heat generator (10) which heats a fluid heat transfer medium to a feed temperature which flows through one or more heating bodies (12) via a hydraulic heating circuit with a feed and a return, in order to heat at least one space in a building, wherein:
the heating curve describes a dependence between the feed temperature and an outside temperature of the building on the basis of a gradient and a parallel shift;
each heating body (12) has a manually adjustable thermostatic valve with an adjusting head or an electronically controllable thermostatic valve for adjusting a volume flow of the heat transfer medium through the heating body (12);
a control device (11) of the heat generator (10) is communicatively connected to a network (40) via an interface, in order to read out and/or adjust a value of the gradient and/or a value of the parallel shift; and
the method comprises the following steps:
predefining a room setpoint temperature for the at least one space by a user and detecting the predefined room setpoint temperature by the control device (11);
detecting a current room actual temperature of the at least one space by the control device (11);
detecting an outside temperature by an outside temperature sensor (13) and/or detecting the outside temperature from a server (20) connected to the network (40) and/or detecting the outside temperature from a terminal (T) of the user and transmitting a measured value of the outside temperature to the control device (11);
displaying a graphical user interface on the terminal (T) of the user as a human-machine interface for inputting and outputting information, wherein the terminal (T) communicates with the control device (11) via the network (40), in order to output instructions to the user and/or to receive inputs of the user;
outputting an instruction to the user to manually set the adjusting heads of all thermostatic valves to a maximum degree of adjustment or outputting a control signal by the control device (11) for automatically opening the electronic thermostatic valves;
a feedback step, wherein the user, after waiting for a fixed period of time for at least one space:
is queried via the user interface whether the room actual temperature in the at least one space falls below or exceeds the predefined room setpoint temperature or whether the room actual temperature corresponds to the room setpoint temperature, and wherein the user inputs a feedback via the user interface in order to indicate whether it is too warm or too cold in the at least one space or whether the room actual temperature is as desired; or
an optimization step, wherein the control device determines an optimized value of the gradient and/or an optimized value of the parallel shift depending on the deviation of the room actual temperature from the room setpoint temperature and the optimized values are adjusted in the heat generator (10),
wherein it is first decided depending on the outside temperature whether only the optimized value of the parallel shift or only the optimized value of the gradient is to be determined,
wherein the control device increases the value of the parallel shift if the user has given the feedback "too cold" or reduces the value of the parallel shift if the user has given the feedback "too warm" or leaves the value of the parallel shift unchanged if the user has given the feedback "as desired",
wherein the control device increases the value of the gradient by a predefined value if the user has given the feedback "too cold" or reduces the value of the gradient by a predefined value if the user has given the feedback "too warm" or leaves the value of the gradient unchanged if the user has given the feedback "as desired",
wherein in the optimization step only the optimized value of the parallel shift is determined if the detected outside temperature is in a range from 10 to 20 °C; or
wherein in the optimization step only the optimized value of the gradient is determined if the detected outside temperature is less than 10 °C; and
repeating the feedback step and the optimization step until the target condition is met that the room actual temperature in at least one space corresponds to the room setpoint temperature or until a predefined number of repetitions is reached.

2. Method according to claim 1, wherein:
if the current outside temperature is in a first temperature range, in the optimization step only the optimized value of the parallel shift is determined depending on the deviation of the room actual temperature from the room setpoint temperature; or
if the current outside temperature is in a second temperature range below the first temperature range, in the optimization step only the optimized value of the gradient is determined depending on the deviation of the room actual temperature from the room setpoint temperature.

3. Method according to claim 1 or 2, wherein:
in the return of the heating circuit a volume flow and/or a return temperature of the fluid heat transfer medium are measured; and
after the opening of the thermostatic valves on the basis of the volume flow and/or on the basis of the return temperature it is determined whether all thermostatic valves are opened.

4. Method according to claim 3, wherein in the optimization step the optimized values of the gradient and/or of the parallel shift are determined depending on a change of the return temperature.

5. Method according to one of the preceding claims, wherein before the opening of the thermostatic valves:
an instruction is output to the user for inputting current control values of the manually adjustable thermostatic valves; and/or
current control values of the electronically controllable thermostatic valves are automatically detected; and
in the optimization step the optimized values of the gradient and/or of the parallel shift are determined depending on the current control values of the thermostatic valves.

6. Method according to one of the preceding claims, wherein:
the user makes an input via the human-machine interface in order to confirm that the target condition is met; or
the room temperature in at least one space is measured via a room temperature sensor and compared with the room setpoint temperature.

7. Method according to one of the preceding claims, wherein:
before carrying out the optimization, the gradient and parallel shift are stored in a storage device of the control device (11) of the heat generator (10) and/or of a server (20) communicatively connected to the network (40) via an interface.

8. Method according to one of the preceding claims, further comprising:
if it is determined after at least one optimization step that the room actual temperature in only one space of a plurality of spaces is greater than the room setpoint temperature,
outputting an instruction to the user for manually closing and/or outputting a control signal for automatically closing the thermostatic valves of the heating bodies (12) in the one space by an amount which is determined depending on the deviation of the room actual temperature from the room setpoint temperature.

9. Method according to one of the preceding claims, further comprising:
if it is determined after at least one optimization step that a deviation of the room actual temperature from the room setpoint temperature is different in a plurality of spaces,
outputting an instruction to the user for venting one or more heating bodies (12).

10. Method according to one of the preceding claims, wherein:
the building has a first number of heated spaces with in each case at least one heating body;
queries in the feedback step for a second number of the spaces whether the respective room actual temperature corresponds to the room setpoint temperature;
the first number is greater than or equal to two; and
the second number is equal to or less than the first number.

11. Heating system (1) for heating spaces in a building, comprising:
one or more heating bodies (12), wherein each heating body (12) has a manually adjustable or an electronically controllable thermostatic valve for adjusting a volume flow of a heat transfer medium through the heating body (12);
a heat generator (10) which heats the fluid heat transfer medium to a feed temperature which flows through the one or more heating bodies (12) via a hydraulic heating circuit with a feed and a return, in order to heat at least one space in the building, wherein
a control device (11) of the heat generator (10) is communicatively connected to a network (40) via an interface;
a server (20) communicatively connected to the network (40) via an interface;
a terminal (T) of a user communicatively connected to the network (40) via an interface with a human-machine interface for inputting and outputting information, **characterized in that**
the heating system (1) is configured to carry out a method according to one of Claims 1 to 10.

## Revendications

1. Procédé d'optimisation d'une courbe de chauffage d'un générateur de chaleur (10) qui chauffe un fluide caloporteur à une température d'aller qui s'écoule à travers un ou plusieurs radiateurs (12) par l'intermédiaire d'un circuit de chauffage hydraulique avec un aller et un retour pour chauffer au moins un espace dans un bâtiment, dans lequel:
la courbe de chauffage décrit, à l'aide d'une pente et d'un décalage parallèle, une dépendance entre la température d'aller et une température extérieure du bâtiment;
chaque radiateur (12) présente une soupape thermostatique réglable manuellement avec une tête de réglage ou une soupape thermostatique réglable électroniquement pour régler un débit volumique du fluide caloporteur à travers le radiateur (12);
un dispositif de régulation (11) du générateur de chaleur (10) est relié de manière communicative à un réseau (40) par l'intermédiaire d'une interface pour lire et/ou régler une valeur de la pente et/ou une valeur du décalage parallèle; et
le procédé comprend les étapes suivantes:
prédétermination d'une température de consigne d'espace pour l'au moins un espace par un utilisateur et détection de la température de consigne d'espace prédéterminée par le dispositif de régulation (11);
détection d'une température réelle d'espace actuelle de l'au moins un espace par le dispositif de régulation (11);
détection d'une température extérieure par un capteur de température extérieure (13) et/ou détection de la température extérieure par un serveur (20) relié au réseau (40) et/ou détection de la température extérieure par un terminal (T) de l'utilisateur et transmission d'une valeur de mesure de la température extérieure au dispositif de régulation (11);
affichage d'une interface utilisateur graphique sur le terminal (T) de l'utilisateur en tant qu'interface homme-machine pour entrer et sortir des informations, le terminal (T) communiquant avec le dispositif de régulation (11) par l'intermédiaire du réseau (40) pour sortir des instructions à l'utilisateur et/ou pour recevoir des entrées de l'utilisateur;
sortie d'une instruction à l'utilisateur pour régler manuellement les têtes de réglage de toutes les soupapes thermostatiques à un degré de réglage maximal ou sortie d'un signal de régulation par le dispositif de régulation (11) pour ouvrir automatiquement les soupapes thermostatiques électroniques;
une étape de retour, dans laquelle l'utilisateur, après avoir attendu une période de temps spécifiée pour au moins un espace:
est interrogé par l'intermédiaire de l'interface utilisateur si la température réelle d'espace dans l'au moins un espace est inférieure ou supérieure à la température de consigne d'espace prédéterminée ou si la température réelle d'espace correspond à la température de consigne d'espace, et dans laquelle l'utilisateur entre un retour par l'intermédiaire de l'interface utilisateur pour indiquer s'il est trop chaud ou trop froid dans l'au moins un espace ou si la température réelle d'espace correspond à ce qui est souhaité; ou
une étape d'optimisation, dans laquelle le dispositif de régulation détermine une valeur optimisée de la pente et/ou une valeur optimisée du décalage parallèle en fonction de l'écart de la température réelle d'espace par rapport à la température de consigne d'espace et les valeurs optimisées sont réglées dans le générateur de chaleur (10),
dans laquelle il est tout d'abord décidé en fonction de la température extérieure si seulement la valeur optimisée du décalage parallèle ou seulement la valeur optimisée de la pente doit être déterminée,
dans laquelle le dispositif de régulation augmente la valeur du décalage parallèle si l'utilisateur a donné le retour « trop froid » ou réduit la valeur du décalage parallèle si l'utilisateur a donné le retour « trop chaud » ou laisse la valeur du décalage parallèle inchangée si l'utilisateur a donné le retour « souhaité »,
dans laquelle le dispositif de régulation augmente la valeur de la pente d'une valeur prédéterminée si l'utilisateur a donné le retour « trop froid » ou réduit la valeur de la pente d'une valeur prédéterminée si l'utilisateur a donné le retour « trop chaud » ou laisse la valeur de la pente inchangée si l'utilisateur a donné le retour « souhaité »,
dans laquelle, dans l'étape d'optimisation, seulement la valeur optimisée du décalage parallèle est déterminée si la température extérieure détectée se situe dans une plage de 10 à 20 °C; ou
dans laquelle, dans l'étape d'optimisation, seulement la valeur optimisée de la pente est déterminée si la température extérieure détectée est inférieure à 10 °C; et
répétition de l'étape de retour et de l'étape d'optimisation jusqu'à ce que la condition cible soit satisfaite que la température réelle d'espace dans au moins un espace corresponde à la température de consigne d'espace ou jusqu'à ce qu'un nombre prédéterminé de répétitions soit atteint.

2. Procédé selon la revendication 1, dans lequel:
si la température extérieure actuelle se situe dans une première plage de températures, dans l'étape d'optimisation, seulement la valeur optimisée du décalage parallèle est déterminée en fonction de l'écart de la température réelle d'espace par rapport à la température de consigne d'espace; ou
si la température extérieure actuelle se situe dans une deuxième plage de températures inférieure à la première plage de températures, dans l'étape d'optimisation, seulement la valeur optimisée de la pente est déterminée en fonction de l'écart de la température réelle d'espace par rapport à la température de consigne d'espace.

3. Procédé selon la revendication 1 ou 2, dans lequel:
dans le retour du circuit de chauffage, un débit volumique et/ou une température de retour du fluide caloporteur sont mesurés; et
après l'ouverture des vannes thermostatiques, à l'aide du débit volumique et/ou à l'aide de la température de retour, il est déterminé si toutes les vannes thermostatiques sont ouvertes.

4. Procédé selon la revendication 3, dans lequel, dans l'étape d'optimisation, les valeurs optimisées de la pente et/ou du décalage parallèle sont déterminées en fonction d'une modification de la température de retour.

5. Procédé selon l'une quelconque des revendications précédentes, dans lequel, avant l'ouverture des vannes thermostatiques:
une instruction est émise à l'utilisateur pour entrer des valeurs de réglage actuelles des vannes thermostatiques réglables manuellement; et/ou
des valeurs de réglage actuelles des vannes thermostatiques réglables électroniquement sont détectées automatiquement; et
dans l'étape d'optimisation, les valeurs optimisées de la pente et/ou du décalage parallèle sont déterminées en fonction des valeurs de réglage actuelles des vannes thermostatiques.

6. Procédé selon l'une quelconque des revendications précédentes, dans lequel:
l'utilisateur fait une entrée par l'intermédiaire de l'interface homme-machine pour confirmer que la condition cible est satisfaite; ou
la température d'espace dans au moins un espace est mesurée par l'intermédiaire d'un capteur de température d'espace et comparée à la température de consigne d'espace.

7. Procédé selon l'une quelconque des revendications précédentes, dans lequel:
avant l'exécution de l'optimisation, la pente et le décalage parallèle sont stockés dans un dispositif de stockage du dispositif de régulation (11) du générateur de chaleur (10) et/ou d'un serveur (20) relié de manière communicative au réseau (40) par l'intermédiaire d'une interface.

8. Procédé selon l'une quelconque des revendications précédentes, comprenant en outre:
s'il est déterminé après au moins une étape d'optimisation que la température réelle d'espace dans seulement un espace d'une pluralité d'espaces est supérieure à la température de consigne d'espace,
sortie d'une instruction à l'utilisateur pour fermer manuellement et/ou sortie d'un signal de régulation pour fermer automatiquement les soupapes thermostatiques des radiateurs (12) dans l'espace, d'une valeur qui est déterminée en fonction de l'écart de la température réelle d'espace par rapport à la température de consigne d'espace.

9. Procédé selon l'une quelconque des revendications précédentes, comprenant en outre:
s'il est déterminé après au moins une étape d'optimisation qu'un écart de la température réelle d'espace par rapport à la température de consigne d'espace est différent dans une pluralité d'espaces,
sortie d'une instruction à l'utilisateur pour ventiler un ou plusieurs radiateurs (12).

10. Procédé selon l'une quelconque des revendications précédentes, dans lequel:
le bâtiment présente un premier nombre d'espaces chauffés avec à chaque fois au moins un radiateur;
l'étape de retour interroge pour un deuxième nombre d'espaces si la température réelle d'espace respective correspond à la température de consigne d'espace;
le premier nombre est supérieur ou égal à deux; et
le deuxième nombre est inférieur ou égal au premier nombre.

11. Système de chauffage (1) pour chauffer des espaces dans un bâtiment, comprenant:
un ou plusieurs radiateurs (12), chaque radiateur (12) présentant une soupape thermostatique réglable manuellement ou une soupape thermostatique réglable électroniquement pour régler un débit volumique d'un fluide caloporteur à travers le radiateur (12);
un générateur de chaleur (10) qui chauffe le fluide caloporteur à une température d'aller qui s'écoule à travers le ou les radiateurs (12) par l'intermédiaire d'un circuit de chauffage hydraulique avec un aller et un retour pour chauffer au moins un espace dans le bâtiment, dans lequel
un dispositif de régulation (11) du générateur de chaleur (10) est relié de manière communicative à un réseau (40) par l'intermédiaire d'une interface;
un serveur (20) relié de manière communicative au réseau (40) par l'intermédiaire d'une interface;
un terminal (T) d'un utilisateur relié de manière communicative au réseau (40) par l'intermédiaire d'une interface avec une interface homme-machine pour entrer et sortir des informations, **caractérisé en ce que**
le système de chauffage (1) est conçu pour mettre en œuvre un procédé selon l'une quelconque des revendications 1 à 10.
